# EUROPEAN PATENT SPECIFICATION

(11) **EP 2 666 608 B1**
(45) Date of publication and mention of the grant of the patent: **25.04.2018**
(21) Application number: 12169628.0
(22) Date of filing: 25.05.2012
(51) Int. Cl.: B29C 33/30

(54) **A lock module for locking a tool to a tool holder**
Arretiermodul zum Arretieren eines Werkzeugs an einen Werkzeughalter
Module de verrouillage permettant de verrouiller un outil dans un porte-outil

(43) Date of publication of application: 27.11.2013
(73) Proprietor: Prodieco Pharmaceutical Components Ltd, Dublin 24 (IE)
(72) Inventor: Rennicks, Robin, Dublin 15 (IE)
(74) Representative: Modiano, Micaela Nadia

(56) References cited:
- EP-A1- 2 292 409
- DE-A1- 3 331 676
- monacoguitar (youtube user name): "Clamping lever with circumferential wedge", , 4 April 2012 (2012-04-04), XP002684878, Retrieved from the Internet: URL:http://www.youtube.com/watch?v=cOr1NKj Pzt0 [retrieved on 2012-10-09]

## Description

### Technical Field

This disclosure relates to the field of workstations for assembly production. In particular, this disclosure relates to locking of tools for setting up of workstations for assembly production.

### Background

A workstation may comprise a tool to be connected and locked to a tool holder. The locking of a tool to a tool holder in a secure manner is critical for the preparation of a workstation for assembly production. The positioning of the tool relative to the tool holder and other tools is also essential for proper production operations. The relative position of the tools may need to be accurately monitored down to the order of millimetres.

Assembly production may include a series of workstations arranged in an assembly row. In the production of blister packages, there may be tools that are specific for each type of blister package. In order to produce different blister packages some tools may need to be replaced with the tools having the required specification. The time required to replace tools has a direct impact on the overall production times. There are a variety of methods for locking a tool to a tool holder. Overall production times may be reduced if a tool can be replaced with minimal effort and time.

EP2292409 discloses a tool holder to which a tool may be attached. The tool holder has three stop surfaces lying in three planes that are perpendicular to each other and a lock pin that can be lowered into the base body of the tool holder and extended from it. The lock pin can be introduced into a receptacle in the tool and comprises a slanted active contact surface defining a fourth plane. At extension of the lock pin, a force component is exerted toward each of the three stop surfaces to lock the tool.

The present disclosure is directed, at least in part, to improving or overcoming one or more aspects of the prior art system.

### Brief Summary

In a first aspect, the present disclosure describes a lock module for locking a tool to a tool holder. The lock module comprises a body. At least one wing projects laterally from a side of the body and lies on a first plane for engagement to the tool holder. At least one lock member is slidably supported in the body and the lock member is actuatable to extend from the body in a direction substantially orthogonal to the first plane to a lock position for engagement to the tool holder. An abutment member is supported in the body to move between a first position and a second position, the abutment member being in abutting engagement with the lock member wherein movement of the abutment member to the second position extends the at least one lock member to the lock position.

### Brief Description of the Drawings

The foregoing and other features and advantages of the present disclosure will be more fully understood from the following description of various examples, when read together with the accompanying drawings, in which:
Fig. 1 is a side view of a tool comprising the lock module according to the present disclosure;
Fig. 2 is a sectional view of the tool of Fig. 1 through the line II-II;
Fig. 3 is an isometric view of the lock module according to the present disclosure;
Fig. 4 is a plan view of the lock module according to the present disclosure;
Fig. 5 is a sectional view of the lock module of Fig.4 through the line V-V;
Fig. 6 is a sectional view of an abutment member and a lock member through line VI-VI according to the present disclosure.

### Detailed Description

This disclosure generally relates to a lock module **14** for locking a tool **10** to a tool holder. This disclosure also relates to a tool **10** comprising the lock module **14.**

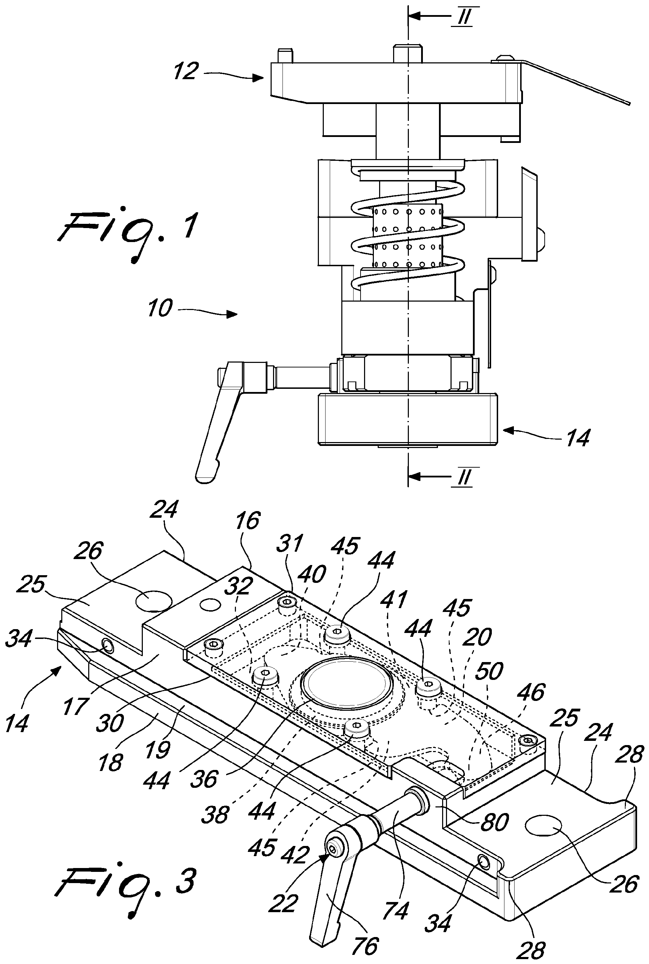

With reference to Fig. 1, a tool **10** may comprise a tool module **12** and a lock module **14.** The tool module **12** may be coupled to the lock module **14.** The tool module **12** and the lock module **14** may be coupled through a mechanical connection.

The tool **10** may be attached to a tool holder through the lock module **14** for setting up a workstation. The tool **10** may be assembled through insertion of the lock module **14** into a tool holder. The tool **10** may be locked to a tool holder by the lock module **14** after insertion thereof into the tool holder. The tool holder may have guides for receiving the lock module **14.**

In an embodiment, the tool **10** may be used in production operations in the pharmaceutical industry. The tool **10** may be used in the production of blister packages.

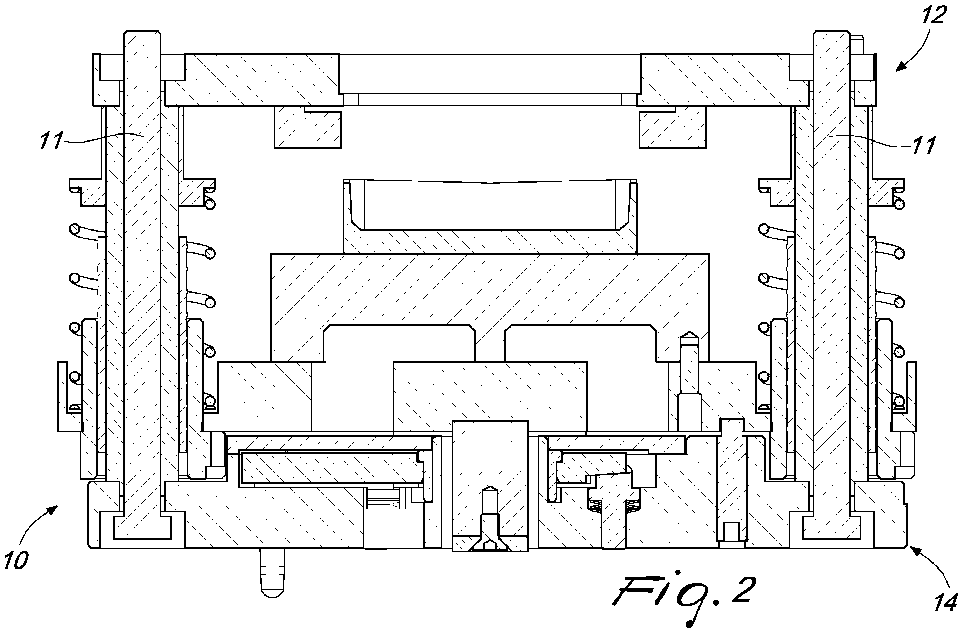

Fig. 2 illustrates a sectional view of the tool **10.** Lock module **14** may be coupled to the tool module **12** through bolts **11.** The coupling points may be positioned at opposite ends of the lock module **14.** The lock module **14** may form the base plate of the tool **10.** Lock module **14** may have a form and dimensions that are suitable for coupling to the tool module **12.**

Fig. 3 illustrates an isometric view of the lock module **14.** The lock module **14** may comprise a body **16.** Body **16** may be suitably adapted for supporting tool **10.** The body **16** may have coupling portions **24** positioned at opposite ends of the lock module **14.** The coupling portions may have a contact surface **25** onto which corresponding portions of the tool module **12** may by supported. Each coupling portion **24** may have an aperture **26** through which the shank of bolt **11** may project and extend into the corresponding coupling portions of the tool module **12.** The head of the bolts **11** may be retained in cavities which are in the coupling portions **24** and in communication with the apertures **26.**

The body **16** may have a stop portion **28** at an end of the lock module **14.** The stop portion **28** may extend from one of the coupling portions **24.** In an embodiment, the body **16** may be provided with a pair of stop portions **28** projecting from opposite sides of the coupling portion **24.** The stop portions **28** may extend in a direction substantially perpendicular to the longitudinal axis of the body **16.** The stop portions **28** may limit the insertion of the lock module **14** into the corresponding tool holder provided with guides that abut against the stop portions **28.**

The lock module **12** may have a wing **18.** The wing **18** may project laterally from a side **17** of body **16** to form a shoulder **19.** The wing **18** may project in a direction substantially perpendicular to the longitudinal axis of the body **16.** The wing **18** may be disposed such that shoulder **19** is spaced from the contact surfaces **25** of the coupling portions **24.** The surface opposite the shoulder **19** may be planar with the surface of the body **16** opposite the contact surface **25.**

The wing **18** may extend along the entire length of side **17** of body **16.** In an embodiment, the wing may extend along a portion of side **17.**

An end of wing **18** may be joined to the stop portion **28** such that shoulder **19** is perpendicular to the stop portion **28.** The opposite end of wing **18** may have an insertion end **21.** The insertion end **21** may be bevelled such that the shoulder **19** has a reduced surface area.

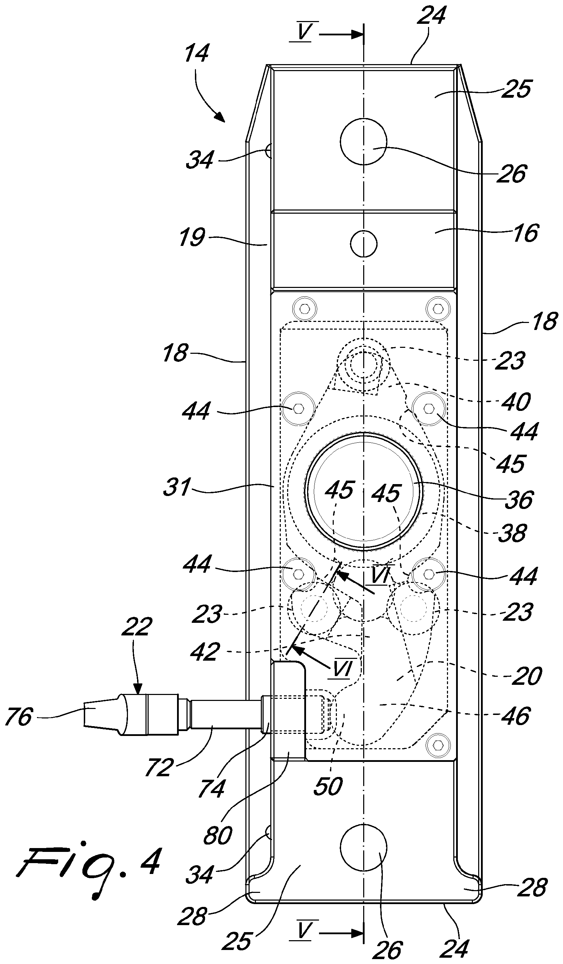

With reference to Fig. 4, the lock module **14** may have a pair of wings **18** projecting laterally from opposite sides **17** of body **16.** The wings **18** may lie on a first plane. The longitudinal axis of body **16** may be parallel to the first plane.

With reference to Figs. 3 and 4, the lock module **14** may comprise plungers **34.** The plungers may be positioned at side **17** of body **16.** Plungers **34** may be disposed at the coupling portions **24** between the shoulder **19** and the contact surface **25.** The plungers **34** may be accommodated within cavities in the body **16.** Springs may be disposed in the cavities to provide a biasing force on the plungers **34** so that the plungers **34** are biased outwards from the cavities. The spring-loaded plungers **34** provide a biasing force exerted laterally from the body **16.** The biasing force of the plungers **34** may be exerted on guides of the tool holder.

In an embodiment, the lock module **14** may comprise a pair of additional plungers on the opposite side **17** of the body **16.** The additional plungers may be laterally aligned with the plungers **34.** The biasing force of the additional plungers may be exerted on opposite guides of the tool holder.

The body **16** may have a housing portion **30** with a void **32.** The housing portion **30** may be centrally positioned on the body **16.** Void **32** may be suitably shaped and dimensioned to accommodate the means for actuating the lock mechanism of the lock module **14.** The void **32** may be bound by side walls and floor of the housing portion **30.** The void **32** may be covered by a cover plate **31** which is bolted to the body **16.**

The lock mechanism may further comprise an abutment member **20.** The abutment member **20** may be movably supported in the body **16.** The abutment member **20** may be supported so as to rotate relative to the body **16.** The abutment member **20** may be plate-like. Opposite ends of abutment member **20** may be narrower relative to the central portion **41** thereof. At an end the abutment member **20** may have an apex portion **40** joined to the central portion **41** and a base portion **42** joined to the central portion **41** at the opposite end.

Abutment member **20** may be supported by a hub **36.** Hub **36** may project substantially perpendicular from the body **16** relative to the longitudinal axis thereof. Hub **36** may project substantially orthogonal to the first plane. Hub **36** may be a tubular projection of the floor of the housing portion **30** extending into the void **32.**

The abutment member **20** may have a hole disposed at the central portion **41** through which the hub **36** may be connected. A bushing **38** may be positioned on the hub **36** and supported on the floor of the housing portion **30.** Bushing **38** may be rotatably mounted to the hub **36.** The abutment member **20** may be engaged to the bushing **38** in order to be rotatably supported about the hub **36.** The abutment member **20** may be supported at the hub **36** so as to be parallel to the wing **18.** The abutment member **20** may be supported at the hub **36** so as to lie in a second plane that is parallel to the first plane.

Abutment member **20** may rotate between a first position and a second position. Abutment member **20** may rotate along the second plane. The narrower apex portion **40** and base portion **42** relative to the central portion may facilitate the rotation of the abutment member **20** within the void **32.**

Abutment member **20** may oscillate between a first position and a second position. Abutment member **20** may oscillate along the second plane. The narrower apex portion 40 and base portion **42** relative to the central portion may facilitate the oscillation of the abutment member **20** within the void **32.**

The oscillation of abutment member **20** may be restricted by limit elements **44.** Limit elements **44** may be disposed within the void **32** and around the abutment member **20.** The limit elements **44** may be positioned in correspondence with the apex portion **40** and base portion **42.** A pair of limit elements **44** may be positioned at opposite sides of the abutment member **20** and at the junction of the apex portion **40** and central portion **41.** A pair of limit elements **44** may be positioned at opposite sides of the abutment member **20** and at the junction of the base portion **42** and central portion **41.**

The limit elements **44** may be disposed radially from the hub **36.** The limit elements **44** may be equidistant from the hub **36.** At the first position abutment member **20** may contact a first set of diagonally opposite limit elements **44.** At the second position abutment member **20** may contact a second set of diagonally opposite limit elements **44.**

In an embodiment, the limit elements **44** may be pins mounted to the floor of the housing portion **30.** The limit elements **44** may retain the cover plate **31** onto the housing portion **30.** The limit elements **44** may be mounted so that the first and second planes are substantially perpendicular to the limit elements **44.**

The abutment member **20** may be provided with grooves **45** into which the limit elements **44** may be accommodated. The grooves **45** may extend through and laterally into the abutment member **20.**

Abutment member **20** may have a lever **46** which extends from the base portion **42.** The lever **46** may extend from a segment of the base portion **42.** The lever **46** may extend in a direction opposite to the apex portion **40** and along the second plane. The lever **46** may have a longitudinal axis oblique to the longitudinal axis of the abutment member **20.**

In an embodiment, the lever **46** may be arched relative to the base portion **42** of the abutment member **20.** The lever **46** may have an arcuate shape.

Lever **46** may have a portion contiguous with the base portion **42** of the abutment member **20.** Opposite to the contiguous portion, lever **46** may have an abutment portion **50.** The abutment portion **50** may have a rounded edge. Rounded edge may be extend in a direction along the second plane and perpendicular to the longitudinal axis of the abutment member **20.**

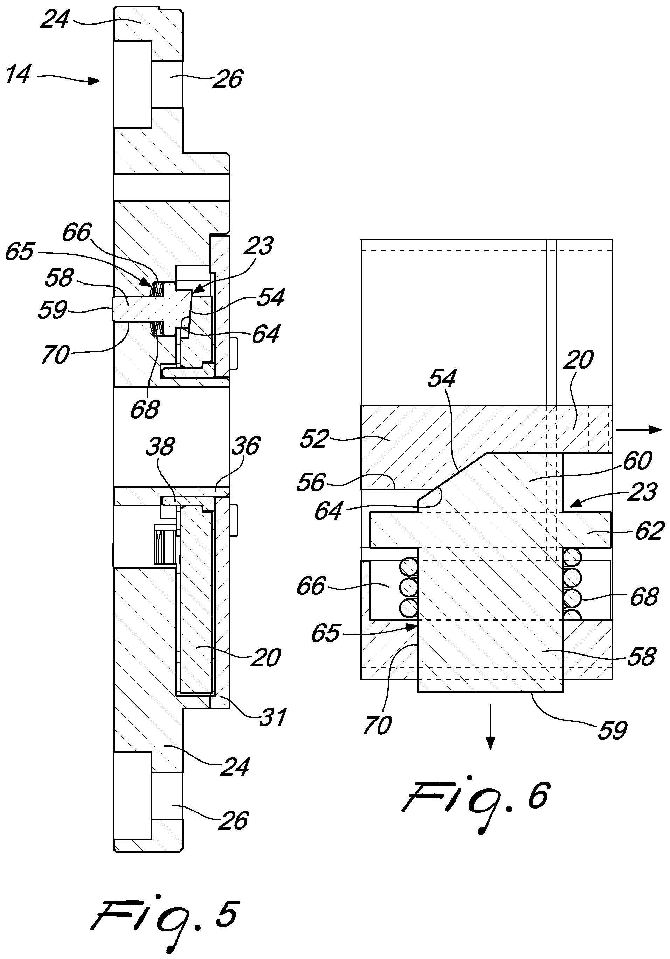

With reference to Fig. 5, abutment member **20** may have a camming boss **52.** In an embodiment, camming boss **52** may be formed by a cutaway of the abutment member **20.**

Camming boss **52** may protrude from the abutment member **20** in a direction substantially perpendicular to the second plane. With the abutment member **20** mounted to the hub **36** the camming boss **52** may protrude in a direction towards the floor of the housing portion **30.** The camming boss **52** may protrude in a direction towards the first plane.

With reference to Fig. 6, the camming boss **52** may have a camming surface **54** inclined relative to the abutment member **20.** Camming surface **54** may be inclined relative to the surface from which the camming boss **52** protrudes. Camming surface **54** may be inclined relative to the second plane. Camming surface **54** may have an end contiguous with the abutment member **20** and a free end opposite. Camming surface **54** may substantially face towards the second position to which abutment member **20** may move.

The camming boss **52** may have a connection surface **56** inclined relative to the camming surface **54.** Connection surface **56** may extend from the free end of the camming surface **54** into the abutment member **20.** Connection surface **56** may be parallel relative to the surface from which the camming boss **52** protrudes.

In an embodiment, connection surface **56** may be inclined relative to the surface from which the camming boss **52** protrudes.

In an embodiment, the abutment member **20** may have a plurality of camming bosses **52.** With the abutment member **20** mounted to the hub **36** the camming bosses **52** may be positioned radially from the hub **36.** The camming bosses **52** may be disposed on the apex portion **40** and the base portion **42** of the abutment member **20.**

The abutment member **20** may have three camming bosses. A first camming boss **52** may be positioned on the apex portion **40.** The second and third camming bosses **52** may be positioned at the base portion **42.** The second and third camming bosses **52** may be mutually spaced in correspondence with opposite sides of the base portion **42.**

Oscillation of the abutment member **20** between the first and second positions effects a corresponding transition of the camming bosses **52.** The camming bosses **52** may transit between two terminal points. The terminal points may correspond to the first and second positions of the abutment member **20.** The transition path of the camming bosses **52** may be parallel to the first plane and to the second plane. The transition path of the camming bosses **52** may be shaped as arcs.

With reference to Fig. 5, the lock mechanism may comprise at least one lock member **23.** The lock member **23** may be slidably supported in the body **16.** The lock member **23** may be actuatable to extend from the body **16.** The lock member **23** may be moved to a lock position along a direction substantially orthogonal to the first plane. The lock member **23** may be moved in a direction away from the first plane. The lock member **23** may be moved in a direction away from the wings **18.**

With the abutment member **20** mounted to the hub **36,** the lock member **23** may be moved in a direction away from the second plane. The lock member **23** may be moved in a direction away from the abutment member **20.**

The lock member **23** may have a rod portion **58** connected to a collar portion **62.** A head portion **60** may be connected to the collar portion **62** opposite the rod portion **58.** The collar portion **62** may be interposed between the head portion **62** and the rod portion **58.**

The collar portion **62** may have a cross-section that is greater than the cross-section of the head portion **60.** The rod portion **58** may have a smaller cross-section relative to the collar portion **62.** In an embodiment, the collar **62** may have a diameter greater than the diameter of the head portion **60.** The rod portion **58** may have a smaller diameter relative to the collar portion **62.**

With reference to Fig. 6, the head portion **60** may have a contact surface **64** for engaging camming surface **54.** Contact surface **64** may be formed on head portion **62** opposite to the collar portion **62.** Contact surface **64** may be inclined relative to the longitudinal axis of the lock member **23.** Contact surface **64** may be inclined relative to the second plane. The angle of inclination of the contact surface **64** relative to the second plane may be the same as the angle of inclination of the camming surface **54** relative to the second plane. Contact surface **64** may substantially face towards the first position of the abutment member **20.**

Body **16** may be adapted to accommodate the lock member **23.** Body **16** may have a hole **65** in the floor of housing portion **30.** The hole **65** may have a recess **66** and a channel **70.**

The recess **66** may be adapted to accommodate the collar portion **62** of the lock member **23.** The collar portion **62** may slidably move in the recess **66.** A biasing element **68** may be disposed in the recess **66** between the collar portion **62** and the floor of the recess **66.** The biasing element **68** may encircle the rod portion **58.** In an embodiment, the biasing element **68** may be a coil spring.

The biasing element **68** may exert a biasing force on the collar portion **62** to push the lock member **23** towards the floor of the housing portion **30.** The biasing element **68** may exert a biasing force on the collar portion **62** to push the lock member **23** towards the abutment member **20.** The biasing element **68** may urge the lock member **23** into a retracted position relative to body **16.**

The channel **70** may be connected to the recess **66.** The channel **70** may have an opening at the recess **66** and an opening on the body **16** for communication to the exterior of the body **16.** The channel **70** may be adapted to accommodate the rod portion **58** of the lock member **23.** The rod portion **58** may slidably move in the channel **70.**

With the lock member **23** in the fully retracted position an abutment end **59** of the rod portion **58** does not protrude beyond the channel **70.** The abutment end **59** may be flush with the surface of body **16.** With the lock member **23** in the fully extended position the abutment end **59** of the rod portion **58** may protrude beyond the channel **70.** The abutment end **59** may protrude beyond the surface of the body **16** at the lock position of the lock member **23.**

The movement of the abutment member **20** from the first position to the second position along the second plane may push the lock member **23** away from the second plane and the camming surface **54** may be forced against the contact surface **64..** The movements of the abutment member **20** and the lock member **23** are indicated by the arrows in Fig. 6.

As camming surface **54** is forced against the contact surface **64** the surfaces **54, 64** may slide relative to each other so as to push the lock member **23** into the hole **65.** The lock member **23** may move against the biasing force exerted by the biasing element **68** so as to compress the biasing element **68** within the recess **66.**

The lock module **14** may comprise a plurality of lock members **23** each provided in respective hole **65.** Each lock member **23** may have respective contact surface **64** to engage a respective camming surface **54** provided on the abutment member **20.** The lock members **23** may be disposed radially from the hub **36** in correspondence with the camming bosses **52** of the abutment member **20.**

In an embodiment, the lock module **14** may have three lock members **23.** A first lock member **23** may be positioned in correspondence with the apex portion **40** of the abutment member **20.** The second and third lock members **23** may be positioned in correspondence with the base portion **42** of the abutment member **20.** The second and third lock members **23** may be mutually spaced in correspondence with opposite sides of the base portion **42.**

The lock module **14** may comprise an actuation member **22** that is engaged to the abutment member **20.** Actuation of the actuation member **22** may move the abutment member **20** from the first position to the second position.

The actuation member **22** may comprise a handle **76** connected to a threaded rod **74** through a connecting rod **72.** The actuation member **22** may be connected to the lock module **14** through the threaded rod **74.** The threaded rod **74** may be mounted to the housing portion **30.**

The housing portion **30** may have a bracket element **80** to receive the threaded rod **74.** The bracket element **80** may extend from the housing portion **30** in a direction perpendicular to the longitudinal axis of body **16** and away from the first plane. The bracket element **80** may be dimensioned greater than the side walls of the housing portion **30** so as to support the actuation member **22.** Threaded rod **74** may be mounted such that the longitudinal axis of the actuation member **22** may be perpendicular to the longitudinal axis of the body **16.** The longitudinal axis of the actuation member **22** may lie on the second plane of the abutment member **20.**

The threaded rod **74** may extend through the bracket element **80** into the void **32.** The threaded rod **74** may be in contact with the abutment member **20.** Threaded rod **74** may be in contact with the lever **46** of the abutment member **20.** Threaded rod **74** may be in contact with the abutment portion **50.**

Threaded rod **74** may be held in the bracket element **80** so that the actuation member **22** may be movable relative to the body **16.** Threaded rod **74** may be rotatable relative to the bracket element **80.** The actuation member **22** may be actuated so as to rotate the threaded rod **74** relative to the bracket element **80.**

The handle **76** may be manually actuated so as to move connecting rod **72** towards the bracket element **80** of the body **16.** The movement of the connecting rod **72** may effect a rotation of the threaded rod **74** through the bracket element **80** to abut the abutment portion **50.** Continued actuation of the handle **76** may push the abutment member **20** from the first position to the second position.

The movement of the abutment member **20** from the second position to the first position may be effected by rotating the handle **76** so as to withdraw the connecting rod **72.** The withdrawal of the connecting rod **72** may effect a counter rotation of the threaded rod **74** relative to the bracket element **80.**

In an embodiment, the mechanism may be activated by rotation of the actuation member **22** relative to the body **16.** The mechanism may be deactivated by rotation of the actuation member **22** in the opposite direction relative to the body **16.**

The lock module **14** may comprise a mechanism to hold the actuation member **22** in the actuated position so as to retain the abutment member **20** at the second position. The mechanism may be activated by rotation of the actuation member **22** such that the actuation member **22** moves in a direction towards the body **16.** The mechanism may be deactivated by rotation the actuation member **22** in an opposite direction such that the actuation member **22** moves in a direction away from the body **16.**

In an embodiment, the actuation member **22** may be held in a position by the threaded rod **74** interacting with a complementary threaded portion in the bracket element **80.** The holding mechanism is activated or deactivated by the screwing of the threaded rod **74** in the bracket element **80.**

The lock module **14** may be operated as described in the foregoing description. The lock module **14** may be connected to the tool module **12** through mechanical connections. The tool **10** may be attached to a tool holder through the lock module **14.**

The lock module **14** may firstly be inserted into a tool holder having at least one guide which connects with the at least one wing **18** of the lock module **14.** In an embodiment, the tool holder may have two guides disposed on opposite sides to connect with wing **18.** The lock module **14** may be inserted into the tool holder up to point of abutment of the stop portion **28** with the end of the guides of the tool holder.

After the lock module **14** is completely inserted into the tool holder actuation member **22** may be actuated so that the threaded rod **74** may push against the abutment member **20.** The abutment member **20** may be moved from the first position to the second position along the second plane by the actuation member **22.** The abutment member **20** may oscillate about the hub **36** from the first position to the second position.

As the abutment member **20** transits from first position to the second position the camming surface **54** of the camming boss **52** may push against the contact surface **64** of the lock member **23.** The camming surface **54** may slide against the contact surface **64** to push the lock member **23** away from the second plane against the biasing force of the biasing element **68.** The biasing element **68** may be compressed due to the movement of the lock member **23.** The lock member **23** may be moved to the lock position at which rod portion **58** may be fully extended from the body **16** and the abutment end **59** may engage a surface of the tool holder.

The lock member **23** may exert a force against the surface of the tool holder so that the shoulder **19** of wings **18** are held against the guides of the tool holder. The force between the wings **18** and the guides may be equal and opposite to the force between the abutment end **59** and the tool holder.

In an embodiment, the abutment member **20** may transit from first position to the second position to force the camming surfaces **54** of the camming bosses **52** against the contact surfaces **64** of the lock members **23.**

The tool **10** may be locked in the tool holder by the pressing action of the lock member **23** and the wings **18** against the surface and the guides, respectively, of the tool holder.

The lock members **23** may be held in the lock position by retaining the abutment member **23** at the second position through the holding mechanism. The actuation member **22** may be retained in the bracket element so as to hold the abutment member **20** at the second position.

The tool **10** may be detached from the tool holder by firstly actuating the actuation member **22** so as to be released from the holding mechanism. Without the actuation member **22** holding the abutment member **20** at the second position, the abutment member **20** may be free to return to the first position.

The biasing force of the biasing element **68** may force the lock member **23** to return from the lock position. The movement of the lock member **23** towards the second plane may force the contact surface **64** against the camming surface **54** so as to oscillate the abutment member **20** from the second position to the first position.

With the abutment member **20** at the first position and the lock member **23** returned to the original position, the tool **10** may be removed from the tool holder. The lock module **14** may be extracted from the tool holder.

The skilled person would appreciate that foregoing embodiments may be modified or combined to obtain the lock module **14** and the tool **10** comprising the lock module **14** of the present disclosure.

### Industrial Applicability

This disclosure describes a lock module **14** for locking a tool **10** to a tool holder. The lock module **14** may enable the tool **10** to be efficiently attached to the tool holder. The lock module **14** enables the tool **10** to be effectively locked to the tool holder. The actuation of the actuation member **22** effects the extension of the lock member **23** to engage and abut the tool holder and to push the wings **18** against the guides of the tool holder. The force exerted by lock member **23** on the tool holder and the wings **18** on the guides of the tool holder may lock the tool **10** to the tool holder. With the lock module **14,** the tool **10** has the locking mechanism incorporated therein.

The plurality of lock members **23** are actuated through the actuation of the actuation member **22** acting on the abutment member **20.** A single abutment member **20** is capable of effecting the extension of the plurality of lock members **23.**

The plurality of lock members **23** enable the tool **10** to be stably locked with the tool holder. The lock members **23** may have a staggered arrangement. A lock member **23** may be offset relative to the other lock member **23.**

Spring-loaded plungers **34** may exert a force orthogonal to the force exerted by the lock member **23** on the tool holder and the shoulder **19** on the guides of the tool holder.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A tool (10) comprising a lock module (14) for locking the tool (10) to a tool holder, the lock module (14) comprising:
a body (16);
at least one wing (18) projecting laterally from a side (17) of the body (16) and lying on a first plane;
at least one lock member (23) slidably supported in the body (16), the lock member (23) being actuatable to extend from the body (16) in a direction substantially orthogonal to the first plane to a lock position; and
an abutment member (20) supported in the body (16) to move between a first position and a second position, the abutment member (20) being in abutting engagement with the lock member (23) wherein movement of the abutment member (20) to the second position extends the at least one lock member (23) to the lock position.

2. The tool (10) of claim 1 wherein the abutment member (20) is mounted to oscillate between the first and second positions along a second plane, the second plane being parallel to the first plane.

3. The tool (10) of claim 2 wherein the abutment member (20) is mounted to a hub (36) projecting from body (16) in a direction substantially orthogonal to the first plane.

4. The tool (10) of claim 1, 2 or 3 comprising a plurality of lock members (23).

5. The tool (10) of claim 4 wherein the lock members (23) are disposed radially from the hub (36).

6. The tool (10) of claim 4 or 5 wherein the abutment member (20) comprises a plurality of inclined camming surfaces (54) engaged to correspondingly inclined contact surfaces (64) of the lock members (23).

7. The tool (10) of any one of preceding claims further comprising an actuation member (22) engaged to the abutment member (20) wherein actuation of the actuation member (22) moves the abutment member (20) from the first position to the second position.

8. The tool (10) of claim 7 comprising a holding mechanism to hold the actuation member (22) in the actuated position so as to retain the abutment member (20) at the second position.

9. The tool (10) of claim 8 wherein the holding mechanism is actuated by rotation of the actuation member (22) relative to the body (16).

10. The tool (10) of claim 8 wherein the holding mechanism is actuated by lateral movement of the actuation member (22) relative to the body (16).

11. The tool (10) of claim 7, 8, 9 or 10 wherein a lever (46) extends angularly from the abutment member (20) for engagement with the actuation member (22).

12. The tool (10) of any one of preceding claims further comprising at least one spring-loaded plunger (34) extending from a side of the body (16) in a direction parallel to the first plane and spaced from the wing (18).

13. The tool (10) of any one of preceding claims further comprising limit elements (44) to restrict the movement of the abutment member (20).

14. The tool (10) of any one of preceding claims wherein a second one wing (18) projects laterally from the opposite side (17) of the body (16) and lying on a first plane;

## Patentansprüche

1. Ein Werkzeug (10), das ein Arretiermodul (14) zum Arretieren des Werkzeugs (10) an einem Werkzeughalter umfasst, wobei das Arretiermodul (14) Folgendes umfasst:
einen Körper (16);
mindestens einen Flügel (18), der lateral aus einer Seite (17) des Körpers (16) herausragt und auf einer ersten Ebene liegt;
mindestens ein Arretierglied (23), das verschiebbar im Körper (16) gelagert ist, wobei das Arretierglied (23) betätigt werden kann, um sich aus dem Körper (16) in eine Richtung zu erstrecken, die im Wesentlichen senkrecht zur ersten Ebene ist, in eine Arretierposition; und
ein Widerlagerglied (20), im Körper (16) gelagert, um sich zwischen einer ersten Position und einer zweiten Position zu bewegen, wobei das Widerlagerglied (20) sich in anstoßendem Eingriff mit dem Arretierglied (23) befindet, wobei die Bewegung des Widerlagerglieds (20) in die zweite Position das mindestens eine Arretierglied (23) in die Arretierposition ausfährt.

2. Das Werkzeug (10) gemäß Anspruch 1, wobei das Widerlagerglied (20) montiert ist, um auf einer zweiten Ebene zwischen der ersten Position und der zweiten Position zu oszillieren, wobei die zweite Ebene parallel zur ersten Ebene ist.

3. Das Werkzeug (10) gemäß Anspruch 2, wobei das Widerlagerglied (20) an einer Nabe (36) montiert ist, die aus dem Körper (16) in einer Richtung im Wesentlichen senkrecht zu der ersten Ebene herausragt.

4. Das Werkzeug (10) gemäß Anspruch 1, 2 oder 3, das eine Vielzahl von Arretiergliedern (23) umfasst.

5. Das Werkzeug (10) gemäß Anspruch 4, wobei die Arretierglieder (23) radial von der Nabe (36) angeordnet sind.

6. Das Werkzeug (10) gemäß Anspruch 4 oder 5, wobei das Widerlagerglied (20) eine Vielzahl schräger Steuerkurvenoberflächen (54) umfasst, die in Eingriff mit entsprechend schrägen Kontaktflächen (64) der Arretierglieder (23) stehen.

7. Das Werkzeug (10) gemäß einem beliebigen der obigen Ansprüche, das weiter ein Antriebsglied (22) umfasst, das in Eingriff mit dem Widerlagerglied (20) steht, wobei die Betätigung des Antriebsgliedes (22) das Widerlagerglied (20) aus der ersten Position in die zweite Position bewegt.

8. Das Werkzeug (10) gemäß Anspruch 7, das einen Haltemechanismus umfasst, um das Antriebsglied (22) in der aktivierten Position zu halten, um so das Widerlagerglied (20) in der zweiten Position zu halten.

9. Das Werkzeug (10) gemäß Anspruch 8, wobei der Haltemechanismus durch Drehung des Antriebsgliedes (22) relativ zum Körper (16) betätigt wird.

10. Das Werkzeug (10) gemäß Anspruch 8, wobei der Haltemechanismus durch die seitliche Bewegung des Antriebsgliedes (22) relativ zum Körper (16) betätigt wird.

11. Das Werkzeug (10) gemäß Anspruch 7, 8, 9 oder 10, wobei ein Hebel (46) sich winklig vom Widerlagerglied (20) erstreckt, zum Eingriff mit dem Antriebsglied (22).

12. Das Werkzeug (10) gemäß einem beliebigen der obigen Ansprüche, das weiter mindestens einen federbelasteten Plunger (34) umfasst, der sich von einer Seite des Körpers (16) in einer Richtung parallel zu der ersten Ebene und vom Flügel (18) beabstandet erstreckt.

13. Das Werkzeug (10) gemäß einem beliebigen der obigen Ansprüche, das weiter Anschlagelemente (44) umfasst, um die Bewegung des Widerlagergliedes (20) einzuschränken.

14. Das Werkzeug (10) gemäß einem beliebigen der obigen Ansprüche, wobei ein zweiter Flügel (18) lateral aus der gegenüberliegenden Seite (17) des Körpers (16) herausragt und auf einer ersten Ebene liegt.

## Revendications

1. Outil (10) comprenant un module de verrouillage (14) pour verrouiller l'outil (10) sur un porte-outil, le module de verrouillage (14) comprenant :
un corps (16) ;
au moins une aile (18) faisant saillie latéralement à partir d'un côté (17) du corps (16) et se trouvant sur un premier plan ;
au moins un élément de verrouillage (23) supporté, de manière coulissante, dans le corps (16), l'élément de verrouillage (23) pouvant être actionné pour s'étendre à partir du corps (16) dans une direction sensiblement orthogonale au premier plan jusqu'à une position de verrouillage ; et
un élément de butée (20) supporté dans le corps (16) pour se déplacer entre une première position et une seconde position, l'élément de butée (20) étant en butée contre l'élément de verrouillage (23), dans lequel le déplacement de l'élément de butée (20) dans la seconde position étend le au moins un élément de verrouillage (23) dans la position de verrouillage.

2. Outil (10) selon la revendication 1, dans lequel l'élément de butée (20) est monté pour osciller entre les première et seconde positions le long d'un second plan, le second plan étant parallèle au premier plan.

3. Outil (10) selon la revendication 2, dans lequel l'élément de butée (20) est monté sur un moyeu (36) faisant saillie du corps (16) dans une direction sensiblement orthogonale au premier plan.

4. Outil (10) selon la revendication 1, 2 ou 3, comprenant une pluralité d'éléments de verrouillage (23).

5. Outil (10) selon la revendication 4, dans lequel les éléments de verrouillage (23) sont disposés radialement à partir du moyeu (36).

6. Outil (10) selon la revendication 4 ou 5, dans lequel l'élément de butée (20) comprend une pluralité de surfaces de came inclinées (54) en prise avec des surfaces de contact (64) inclinées correspondantes des éléments de verrouillage (23).

7. Outil (10) selon l'une quelconque des revendications précédentes, comprenant en outre un élément d'actionnement (22) en prise avec l'élément de butée (20), dans lequel l'actionnement de l'élément d'actionnement (22) déplace l'élément de butée (20) de la première position à la seconde position.

8. Outil (10) selon la revendication 7, comprenant en outre un mécanisme de maintien pour maintenir l'élément d'actionnement (22) dans la position actionnée afin de retenir l'élément de butée (20) dans la seconde position.

9. Outil (10) selon la revendication 8, dans lequel le mécanisme de maintien est actionné par la rotation de l'élément d'actionnement (22) par rapport au corps (16).

10. Outil (10) selon la revendication 8, dans lequel le mécanisme de maintien est actionné par le déplacement latéral de l'élément d'actionnement (22) par rapport au corps (16).

11. Outil (10) selon la revendication 7, 8, 9 ou 10, dans lequel un levier (46) s'étend de manière angulaire à partir de l'élément de butée (20) pour venir en prise avec l'élément d'actionnement (22).

12. Outil (10) selon l'une quelconque des revendications précédentes, comprenant en outre au moins un piston plongeur à ressort (34) s'étendant à partir d'un côté du corps (16) dans une direction parallèle au premier plan et espacé de l'aile (18).

13. Outil (10) selon l'une quelconque des revendications précédentes, comprenant en outre des éléments de limite (44) pour limiter le mouvement de l'élément de butée (20).

14. Outil (10) selon l'une quelconque des revendications précédentes, dans lequel une seconde aile (18) fait latéralement saillie à partir du côté (17) opposé du corps (16) et se trouvant sur un premier plan.
